# EUROPÄISCHE PATENTANMELDUNG

(11) **EP 1 857 188 A1**
(43) Veröffentlichungstag der Anmeldung: **21.11.2007**
(21) Anmeldenummer: 06114042.2
(22) Anmeldetag: 16.05.2006
(51) Int. Cl.: B05B 17/06, B05D 1/02, C09J 5/02, B05D 1/34

(54) **Verfahren zum Auftragen einer Haftvermittlerzusammensetzung mit einem Ultraschallzerstäuber**

(71) Anmelder: Sika Technology AG, 6340 Baar (CH)
(72) Erfinder: Buck, Manuel, 5412, Gebenstorf (CH)

(57) **Zusammenfassung**

Die vorliegende Erfindung betrifft die Verwendung eines Ultraschallzerstäubers zum Auftragen einer Haftvermittlerzusammensetzung auf mindestens eine Substratoberfläche, sowie ein Verfahren zum Verkleben oder Abdichten mindestens zweier Substrate, wobei auf mindestens ein Substrat vor dem Verkleben oder Abdichten eine Haftvermittlerzusammensetzung mittels eines Ultraschallzerstäubers aufgetragen wird.

## Beschreibung

### Technisches Gebiet

Die Erfindung betrifft das Gebiet der Applikationstechnik zum Auftragen von hydrolysierbaren Flüssigkeiten, insbesondere von Haftvermittlerzusammensetzungen, auf eine Oberfläche

### Stand der Technik

Hydrolysierbare Flüssigkeiten wie Haftvermittlerzusammensetzungen werden seit langem für die Verbesserung der Haftung, insbesondere derjenigen von Klebstoffen und Dichtstoffen, verwendet. Im Besonderen sind als solche Haftvermittlerzusammensetzungen Silan- und Titanat-Verbindungen seit langem bekannt. Diese Haftvermittlerzusammensetzungen werden als Primer oder Haft-Aktivatoren für die Vorbehandlung von zu verklebenden oder abzudichtenden Oberflächen verwendet.

Das Auftragen dieser hydrolysierbaren Flüssigkeiten auf eine Oberfläche erfolgt beispielsweise durch ein Sprüh-, Streich-, oder Walzverfahren. Bei allen bekannten Verfahren besteht jedoch das Problem, dass die Dosierung der Auftragsmenge schwierig ist. So muss zum Teil beim Applizieren mittels Pinsel, Tuch, Filz oder Schwamm in einem zweiten Arbeitsschritt mit einem weiteren Tuch, Filz oder Schwamm ein Teil der Auftragsmenge wieder weggewischt werden um eine Überdosierung zu vermeiden, was zeit- und kostenaufwendig ist. Zudem ist das Auftragen von höher viskosen Haftvermittlerzusammensetzungen, beispielsweise von Primern, mit einem Tuch, Filz oder Schwamm nur auf glatte Oberflächen sinnvoll, denn bei rauen Oberflächen dringt der Primer mit diesem Applikationsverfahren nicht in alle Poren ein und kann nicht die ganze Oberfläche benetzen. Dies führt dazu, dass der auf eine mit einem Primer vorbehandelte Substratoberfläche aufgetragene Kleb- oder Dichtstoff nicht überall gleich gut haftet.

Beim Sprühverfahren besteht das Problem des sogenannten "Oversprays", d.h., dass beim Sprühen der zu beschichtende Bereich nicht genau eingegrenzt werden kann und die hydrolysierbaren Flüssigkeit auch an Stellen aufgetragen wird, welche nicht mit Kleb- oder Dichtstoffen in Kontakt gebracht werden. Dies führt zu einem unnötigen Materialverbrauch und kann zusätzlich unästhetisch wirken oder einen zusätzlichen Reinigungsschritt nötig machen.

Bei allen herkömmlichen Applikationsverfahren besteht das Problem, dass es schwierig ist, die Haftvermittlerzusammensetzungen in kleinen Mengen aufzutragen. Um auch das Auftragen von kleinen Mengen auf eine Oberfläche zu ermöglichen, werden die Haftvermittlerzusammensetzungen teilweise verdünnt, vorzugsweise mit einem leicht flüchtigen Lösungsmittel. Es besteht daher das Bedürfnis, ein Verfahren bereitzustellen, welches das Auftragen von hydrolysierbaren Flüssigkeiten in dünnen Schichten und kleinen Mengen, sowie in gleichmässiger Verteilung und auf einem begrenzten, vordefinierten Bereich ermöglicht. Da Haftvermittlerzusammensetzungen häufig in geschlossenen Produktionsstätten verwendet werden, wo das Verdunsten der Lösungsmittel für die Arbeiter ein gesundheitliches Risiko darstellt, besteht zudem das Bedürfnis, ein Verfahren bereitzustellen, welches auch das Auftragen von lösungsmittelfreien Haftvermittlersubstanzen ermöglicht.

### Darstellung der Erfindung

Die Aufgabe der vorliegenden Erfindung ist es daher, ein Verfahren zur Verfügung zu stellen, welches die Nachteile des Standes der Technik überwindet und insbesondere befähigt, hydrolysierbare Flüssigkeiten auf einen vordefinierten Bereich einer Oberfläche aufzutragen und insbesondere eine gleichmässige Verteilung auch auf unebenen Oberflächen zu erlauben.

Überraschenderweise wurde gefunden, dass gemäss Anspruch 1 ein Ultraschallzerstäuber ein derartiges Mittel darstellt, welches diese Aufgabe löst.

Diese Methode eignet sich insbesondere für Haftvermittlerzusammensetzungen, welche für die Verbesserung der Haftung für Kleb- und Dichtstoffe eingesetzt werden. Ein Vorteil der vorliegenden Erfindung besteht nun auch darin, dass Haftvermittlersubstanzen ohne Lösungsmittel in dünnen Schichten auf eine Oberfläche aufgetragen werden können.

Durch die Verwendung eines Ultraschallzerstäubers kann auch eine zweikomponentige hydrolysierbare Flüssigkeit appliziert werden. Zudem erlaubt die Verwendung des Ultraschallzerstäubers ein schnelles und sicheres Auftragungsverfahren einer Haftvermittlerzusammensetzung, was zu einem schnelleren und sicheren Prozess beim Verkleben und Abdichten sowie zu geringeren Material- oder Bearbeitungskosten führt.

Weitere Gegenstände der vorliegenden Erfindung sind somit auch ein Verfahren zum Verkleben und Abdichten, ein verklebter oder abgedichteter Artikel, sowie ein Bauwerk oder Transportmittel.

Bevorzugte Ausführungen der Erfindung sind Gegenstand der abhängigen Ansprüche.

### Weg zur Ausführung der Erfindung

Die vorliegende Erfindung betrifft die Verwendung eines Ultraschallzerstäubers zum Auftragen einer hydrolysierbaren Flüssigkeit auf mindestens eine Substratoberfläche.

Als Ultraschallzerstäuber können herkömmliche Ultraschallzerstäuber verwendet werden, welche einen Ultraschallwandler umfassen, in welchem mittels piezokeramischer Elemente aus elektrischen Schwingungen mechanische Schwingungen erzeugt werden. Das piezokeramische Element wird bei der vorliegenden Erfindung mit reaktiver Flüssigkeit benetzt und durch Ultraschall in Schwingungen versetzt. Die Flüssigkeit wird zu Kapillarwellen angeregt, von deren Spitze feine Tröpfchen abgeschnürt und weggeschleudert werden. Vorzugsweise liegt die Arbeitsfrequenz des piezokeramischen Elements bei 1 bis 1000 kHz, insbesondere bei 10 bis 500 kHz, bevorzugt bei 20 bis 200 kHz, noch mehr bevorzugt bei 50 bis 100 kHz.

Vorzugsweise ist der Ultraschallzerstäuber Teil einer Zerstäubervorrichtung zur Erzeugung eines gerichteten Sprühnebels, wobei die Zerstäubervorrichtung einen Gehäuseteil mit einem Behälter zur Aufnahme der zu zerstäubenden Flüssigkeit sowie eine Auftragsdüse umfasst, welche die Richtung der Tröpfchen lenkt, so dass die hydrolysierbare Flüssigkeit durch gleichmässige Verteilung der zugeführten Flüssigkeitsmenge auf der Substratoberfläche einen begrenzten Flüssigkeitsfilm der gewünschten Schichtdicke bildet. Besonders bevorzugt ist der Ultraschallzerstäuber ein Teil der Auftragsdüse.

Besonders geeignet sind Ultraschallzerstäuber, welche eine zerstäubte Flüssigkeit erzeugen, welche grösstenteils, d.h. ein Maximum in der Häufigkeitsverteilung an, Tröpfchen mit einem Durchmesser von weniger als 200 µm, vorzugsweise zwischen 1 und 100 µm, noch mehr bevorzugt zwischen 10 und 70 µm, am meisten bevorzugt zwischen 20 und 60 µm enthält.

Vorzugsweise wird ein Ultraschallzerstäuber verwendet, welcher so eingestellt werden kann, dass er einen Flüssigkeitsfilm der hydrolysierbaren Flüssigkeit auf der Substratoberfläche erzeugen kann, welcher eine Trockenfilmschichtdicke von vorzugsweise etwa zwischen 10 nm und 15 µm, bevorzugt zwischen 50 nm und 1 µm, noch mehr bevorzugt zwischen 70 und 150 nm aufweist. Es ist möglich, dass mehrere Schichten nacheinander aufgetragen werden. Vorzugsweise wird dadurch die hydrolysierbare Flüssigkeit in einer Menge zwischen 5 und 200 g/m², insbesondere zwischen 10 und 100 g/m², aufgetragen und, im Falle einer Haftvermittlerzusammensetzung enthaltend Organo-Silizium-, Organo-Titan- und/oder Organo-Zirkoniumverbindung, in einer Menge von 0.02 bis 40 g/m², insbesondere 0.1 bis 20 g/m², bevorzugt 0.5 bis 10 g/m², an Organo-Silizium-, Organo-Titan- und/oder Organo-Zirkoniumverbindung.

Als besonders geeignet hat sich ein Ultraschallzerstäuber der Firma Lechler GmbH, Deutschland, erwiesen, insbesondere der Ultraschallzerstäuber des Typs US2 oder US1.

Besonders vorteilhaft hat sich ein Ultraschallzerstäuber mit einer Zerstäubervorrichtung erwiesen, bei welchem die hydrolysierbare Flüssigkeit, insbesondere die Haftvermittlerzusammensetzung, mit Hilfe von mindestens einem Trägergas auf die Substratoberfläche aufgetragen wird. Als Trägergas kommen gewöhnliche Luft, Sauerstoff, Kohlendioxid oder ein Inertgas wie beispielsweise Stickstoff oder Argon in Frage. Das Trägergas, insbesondere Luft, kann eine gewisse Menge an Feuchtigkeit, insbesondere Wasser, enthalten. Falls Luft als Trägergas verwendet wird, beträgt die Luftfeuchtigkeit bei 20°C vorzugsweise zwischen 20 und 70%. Die Menge des Wassers ist bevorzugt so bemessen, dass die hydrolysierbare Flüssigkeit hydrolysieren oder teilhydrolysieren kann, bis sie auf die zu behandelnde Oberfläche trifft. Das Trägergas kann unter Druck die vom Ultraschallzerstäuber erzeugten Flüssigkeitströpfchen auf die Substratoberfläche befördern. Der Zerstäuberdruck kann dabei so gewählt werden, dass die Tröpfchen grössere Entfernungen überbrücken können und von unruhiger Umgebungsatmosphäre wenig beeinflusst werden. Allerdings soll der Druck nur so hoch gewählt werden, damit die Flüssigkeitströpfchen in der Regel nicht zu stark von der Substratoberfläche abprallen und nicht zu stark den Rand der Auftragsfläche verschmutzen. Der Druck beträgt vorzugsweise zwischen 0 und 5 bar, noch mehr bevorzugt zwischen 1 und 2 bar, vorzugsweise etwa 1 bar. Das heisst, dass die Flüssigkeitströpfchen sowohl mit wie auch ohne zusätzliches Trägergas auf eine Substratoberfläche aufgetragen werden können. In der ersten Variante werden die Flüssigkeitströpfchen durch die Gravität auf die Substratoberfläche fallen gelassen, in der zweiten Variante werden die Flüssigkeitströpfchen in einem Gasstrom, allenfalls auch in einer Schutzatmosphäre, gezielt auf die Oberfläche aufgetragen.

In einer Ausführungsform der vorliegenden Erfindung kann das Trägergas mindestens eine zusätzliche Komponente K2 umfassen, welche mit den durch den Ultraschallzerstäuber generierten Tröpfchen der ersten Komponente **K1,** welche mindestens eine hydrolysierbare Flüssigkeit enthält, auf die Substratoberfläche aufgetragen wird. Es kann von Vorteil sein, wenn die zweite Komponente **K2** ebenfalls durch einen zweiten Ultraschallzerstäuber geleitet wird, wodurch die zweite Komponente **K2** in Tröpfchen zerstäubt wird. Das Trägergas leitet dann die Tröpfchen der zweiten Komponente **K2** am Ultraschallzerstäuber für die erste Komponente **K1** der hydrolysierbaren Flüssigkeit vorbei auf die Substratoberfläche, wobei sich die Tröpfchen der Komponente **K2** mit den Tröpfchen der Komponente **K1** vermischen und gegebenenfalls miteinander reagieren oder wobei die Tröpfchen der Komponente **K2** eine Kondensation der Komponente **K1** auslösen oder katalysieren. Die Reihenfolge, ob zuerst die erste Komponente **K1** oder die zweite Komponente **K2** vom Trägergas aufgenommen und dann über die jeweils andere Komponente geleitet wird, kann beliebig gewählt werden.

Der Vorteil der vorliegenden Erfindung beim Auftragen von mindestens zwei Komponenten, wobei mindestens eine Komponente eine hydrolysierbare Flüssigkeit umfasst, liegt darin, dass die Komponenten in kleinen Tröpfchen miteinander vermischt werden, was zu einer guten Vermischung und daher zu einer schnellen Reaktion führt.

In einer bevorzugten Variante weist die erste Komponente **K1** mindestens eine funktionelle Gruppe **Y** und die zweite Komponente **K2** mindestens eine funktionelle Gruppe **Z** auf, wobei die funktionelle Gruppe **Y** und die funktionelle Gruppe **Z** chemisch, insbesondere über eine Additionsreaktion, miteinander reagieren.

Die funktionelle Gruppe Y ist insbesondere ausgewählt aus der Gruppe umfassend Oxiran-, (Meth)acryloxy-, NCO, Alkoxysilan und Vinylgruppe, insbesondere NCO, Epoxy, (Meth)acrylsäure, (Meth)acrylat und Alkoxysilan, und die Gruppe **Z** ist insbesondere ausgewählt aus der Gruppe umfassend COOH, NH₂, NH, SH und OH.

Die Komponente **K2,** welche mit der Komponente **K1** reagiert oder welche eine Kondensation der Komponente **K1** auslöst oder katalysiert, ist bevorzugt eine Organo-Zinnverbindung oder eine Säure.

In einer bevorzugten Ausführungsform ist die Komponente **K2** eine Organo-Zinnverbindung und stellt vorzugsweise eine Dialkyl-Zinndiacetylacetonat oder ein Dialkylzinndicarboxylat dar und ist insbesondere Dibutylzinndilaurat oder Dibutylzinndiacetat. Bevorzugt ist Komponente **K2** Dibutylzinndilaurat..

In einer weiteren bevorzugten Ausführungsform ist die Komponente **K2** eine Säure. Die Säure kann eine organische oder eine anorganische Säure sein. Die Säure weist typischerweise einen pKa1 von weniger als 6 auf.

Als anorganische Säure eignen sich insbesondere phosphorhaltige Säuren oder schwefelhaltige Säuren. Als besonders geeignet haben sich Sulfonsäure oder Phosphorsäure, insbesondere Schwefelsäure erwiesen.

Als organische Säuren eignen sich insbesondere Ameisen-, Essig-, Aminosäure. Als besonders geeignet hat sich Essigsäure erwiesen.

In einer weiteren Variante enthält die erste Komponente **K1** mindestens eine Verbindung, welche unter dem Einfluss eines Katalysators oder Initiators, welcher in der zweiten Komponente **K2** vorhanden ist, polymerisiert.

In eine bevorzugten Ausführungsform dieser Variante ist die unter dem Einfluss eines Katalysators oder Initiators der Komponente **K2** polymerisiernde Verbindung der Komponente **K1** eine ungesättigte Verbindung, welche ausgewählt ist aus der Gruppe bestehend aus Styrol, Acrylonitril, (Meth)acrylamide, (Meth)acrylsäure, (Meth)acrylate, Vinylalkohole, Vinylether, Vinylester, und ungesättigte Polyester und ist bevorzugt ein (Meth)acrylat. Die zweite Komponente **K2** dieser Ausführungsform enthält als Initiator ein Radikalbildner, insbesondere ein Peroxid oder Hydroperoxid oder ein Perester, bevorzugt ein organisches Peroxid.

Die Komponenten **K1** zu **K2** können noch weitere Bestandteile enthalten, wie sie dem Fachmann für zweikomponentige Zusammensetzungen bekannt sind. Derartige weitere Bestandteile sind insbesondere Zusätze wie Weichmacher, Füllstoffe, Haftvermittler, UV-Absorptionsmittel, UV- oder und Wärmestabilisatoren, Antioxidantien, Flammschutzmittel, optische Aufheller, Katalysatoren, Farbpigmente oder Farbstoffe. Insbesondere bevorzugt als weitere derartige Bestandteile sind Füllstoffe. Als bevorzugte Füllstoffe gelten Russ (Carbon black) und Kreiden, sowohl beschichtet als auch unbeschichtet.

Unter "hydrolysierbarer Flüssigkeit", welche gemäss vorliegender Erfindung mit einem Ultraschallzerstäuber aufgetragen werden kann, wird im ganzen vorliegenden Text eine Flüssigkeit verstanden, welche mit Wasser reagiert und dadurch gespalten wird. Besonders geeignet gemäss vorliegender Erfindung sind Flüssigkeiten, welche niederviskos sind und eine dynamische Zähigkeit von bis zu etwa 10 bis 100 mPa*s, vorzugsweise bis etwa 20 bis 60 mPa*s aufweisen. Besonders bevorzugt sind feststofffreie Flüssigkeiten. Aber auch Flüssigkeiten, welche feine Feststoffpartikel wie Russ enthalten, sind geeignet. Insbesondere geeignete hydrolysierbare Flüssigkeiten sind Haftvermittlerzusammensetzungen, insbesondere Haftvermittlerzusammensetzungen umfassend mindestens eine hydrolysierbare Haftvermittlersubstanz enthaltend oder bestehend aus einer Silan-, Titanat- und/oder Zirkoniumverbindung.

Die mindestens eine hydrolysierbare Haftvermittlersubstanz kann eine Organo-Siliziumverbindung sein. Grundsätzlich sind alle dem Fachmann bekannte Organo-Siliziumverbindungen, welche als Haftvermittler eingesetzt werden, geeignet. Bevorzugt trägt diese Organo-Siliziumverbindung mindestens eine, insbesondere mindestens zwei, Alkoxygruppen, welche über eine Sauerstoff-Silizium-Bindung direkt an ein Siliziumatom gebunden ist oder sind. Weiterhin trägt die Organo-Siliziumverbindung mindestens einen Substituenten, welcher über eine Silizium-Kohlenstoffbindung an das Siliziumatom gebunden ist, und welcher gegebenenfalls eine funktionelle Gruppe aufweist, welche ausgewählt ist aus der Gruppe umfassend Oxiran-, Hydroxy-, (Meth)acryloxy-, Amino-, Mercapto- und Vinylgruppe.

Als Organo-Siliziumverbindungen sind besonders geeignet Organo-Siliziumverbindungen der Formeln Formel (I) oder (II) oder (III)

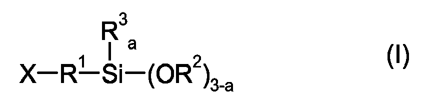

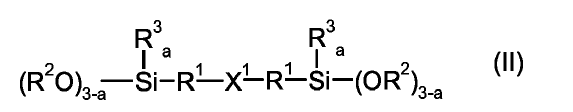

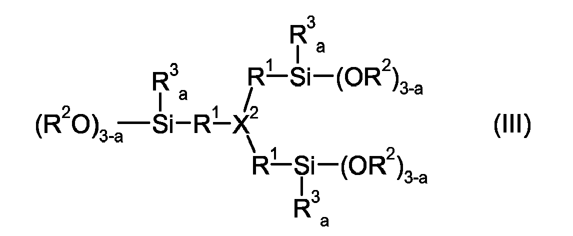

R¹ steht hierbei für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.

R² steht hierbei für eine Alkylgruppe mit 1 bis 5 C-Atomen, insbesondere für Methyl oder Ethyl, oder eine Acylgruppe.

R³ steht hierbei für eine Alkylgruppe mit 1 bis 8 C-Atomen, insbesondere Methyl.

X steht hierbei für ein H, oder eine funktionelle Gruppe, welche ausgewählt ist aus der Gruppe umfassend Oxiran, OH, (Meth)acryloxy, Amin, SH, Acylthio und Vinyl, bevorzugt Amin, steht. Der Vollständigkeit halber wird erwähnt, dass unter Acylthio in diesem Dokument der Substituent 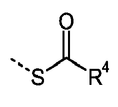 verstanden wird, wobei R⁴ für Alkyl, insbesondere mit 1 bis 20 Kohlenstoffatomen, steht und die gestrichelte Linie die Bindung zum Substituent R¹ darstellt.

X¹ steht hierbei für eine funktionelle Gruppe, welche ausgewählt ist aus der Gruppe umfassend NH, S, S₂ und S₄.

X² steht hierbei für eine funktionelle Gruppe, welche ausgewählt ist aus der Gruppe umfassend N und Isocyanurat.

a steht hierbei für einen der Werte 0, 1 oder 2, bevorzugt 0.

Der Substituent R¹ bedeutet insbesondere eine Methylen-, Propylen-, Methylpropylen-, Butylen- oder Dimethylbutylengruppe. Als besonders bevorzugt wird. Als Substituent R¹ eine Propylengruppe.

Amino-, Mercapto- oder Oxiran-Gruppen aufweisenden Organo-Siliziumverbindungen werden auch als "Aminosilane", "Mercaptosilane" oder "Epoxysilane" bezeichnet.

Als Organo-Siliziumverbindungen der Formel (I) sind beispielsweise geeignet die Organo-Siliziumverbindungen ausgewählt aus der Gruppe umfassend Octyltrimethoxysilan, Dodecyltrimethoxysilan, Hexadecyltrimethoxysilan, Methyl-octyldimethoxysilan; 3-Glycidyloxypropyltrimethoxysilan, 3-Glycidyloxypropyltriethoxysilan; 3-Methacryloxypropyltrialkoxysilane, 3-Methacryloxypropyltriethoxysilan, 3-Methacryloxypropyltrimethoxysilan; 3-Aminopropyltrimethoxysilan, 3-Aminopropyltriethoxysilan, 3-Aminopropyl-dimethoxymethylsilan, 3-Amino-2-methylpropyl-trimethoxysilan, N-(2-Aminoethyl)-3-aminopropyl-trimethoxysilan, N-(2-Aminoethyl)-3-aminopropyl-triethoxysilan, N-(2-Aminoethyl)-3-aminopropyl-dimethoxymethylsilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyldimethoxymethylsilan, N-(Methyl)-3-aminopropyltrimethoxysilan, N-(n-butyl)-3-aminopropyltrimethoxysilan; 3-Mercaptopropyltriethoxysilan, 3-Mercaptopropyltrimethoxysilan, 3-Mercaptopropyl-methyldimethoxysilan; 3-Acylthiopropyltrimethoxysilan; Vinyltrimethoxysilan und Vinyltriethoxysilan.

Auch bevorzugt sind die gerade genannten Organo-Siliziumverbindungen, deren Alkoxygruppen durch Acetoxygruppen ersetzt sind, wie zum Beispiel Octyltriacetoxysilan (Octyl-Si(O(O=C)CH₃)₃). Derartige Organo-Siliziumverbindungen spalten Essigsäure bei der Hydrolyse ab.

Bevorzugt sind bei diesen genannten Organo-Siliziumverbindungen diejenige, welche einen an das Siliziumatom gebundenen organischen Substituenten aufweisen, welcher zusätzlich noch eine funktionelle Gruppe aufweisen, das heisst, welcher keine Alkylgruppe ist, und einer Formel (I) entsprechen, in welcher X nicht H ist.

Als Organo-Siliziumverbindungen der Formel (II) sind geeignet beispielsweise die Organo-Siliziumverbindungen ausgewählt aus der Gruppe umfassend Bis-[3-(trimethoxysilyl)-propyl]-amin, Bis-[3-(triethoxysilyl)-propyl]-amin, 4,4,15,15-Tetraethoxy-3,16-dioxa-8,9,10,11-tetrathia-4-15-disilaoctadecan (Bis(triethoxysilylpropyl)polysulfid oder Bis(triethoxysilylpropyl)tetrasulfan), Bis(triethoxysilylpropyl)disulfid.

Als Organo-Siliziumverbindungen der Formel (III) sind geeignet beispielsweise die Organo-Siliziumverbindungen ausgewählt aus der Gruppe umfassend Tris-[3-(trimethoxysilyl)-propyl]-amin, Tris-[3-(triethoxysilyl)-propyl]-amin, 1,3,5-tris-[3-(trimethoxysilyl)propyl]-1,3,5-triazine-2,4,6(1 H,3H,5H)-trion-harnstoff (=Tris-(3-(trimethoxysilyl)propyl)isocyanurat) und 1,3,5-tris[3-(triethoxysilyl)propyl]-1,3,5-triazine-2,4,6(1 H,3H,5H)-trion-harnstoff (=Tris(3-(triethoxysilyl)propyl)isocyanurat).

Bevorzugt als Organo-Siliziumverbindungen sind Aminosilane, insbesondere Aminosilane mit X = NH₂ oder NH₂-CH₂-CH₂-NH, X¹ = NH und X² = N. Besonders bevorzugt sind 3-Aminopropyltrimethoxysilan, N-(2-Aminoethyl)-3-aminopropyl-trimethoxysilan, Bis[3-(trimethoxysilyl)-propyl]-amin, 3-Aminopropyltriethoxysilan, N-(2-Aminoethyl)-3-aminopropyl-triethoxysilan und Bis[3-(triethoxysilyl)-propyl]-amin sowie deren Mischungen untereinander. Es hat sich gezeigt, dass insbesondere mit Aminosilanen, besonders bei den in diesem Abschnitt erwähnten Aminosilanen, die Mikrorissbildung der thermisch gehärteten Silikonbeschichtung reduziert wird.

Die mindestens eine hydrolysierbare Haftvermittlersubstanz kann weiterhin eine Organo-Titanverbindung sein. Grundsätzlich sind alle dem Fachmann bekannte Organo-Titanverbindungen, welche als Haftvermittler eingesetzt werden, geeignet.

Insbesondere geeignet sind Organo-Titanverbindung, welche mindestens eine funktionelle Gruppe trägt, welche ausgewählt ist aus der Gruppe umfassend Alkoxygruppe, Sulfonatgruppe, Carboxylatgruppe, Dialkylphosphatgruppe, Dialkylpyrophosphatgruppe und Acetylacetonatgruppe, oder Mischungen davon, und welche über ein Sauerstoff-Titan-Bindung direkt an ein Titanatom gebunden ist.

Besonders geeignet sind Verbindungen, bei denen alle an das Titan gebundene Substituenten aus der Gruppe umfassend Alkoxygruppe, Sulfonatgruppe, Carboxylatgruppe, Dialkylphosphatgruppe, Dialkylpyrophosphatgruppe und Acetylacetonatgruppe ausgewählt sind, wobei alle Substituenten identisch oder verschieden von einander sein können.

Als Alkoxygruppen haben sich insbesondere sogenannte Neoalkoxy-Substituenten, insbesondere der folgenden Formel (IV) besonders geeignet erwiesen

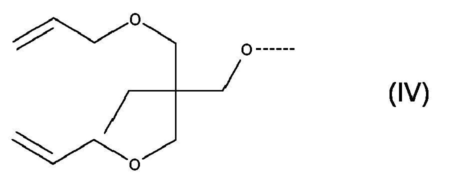

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der folgenden Formel (V)

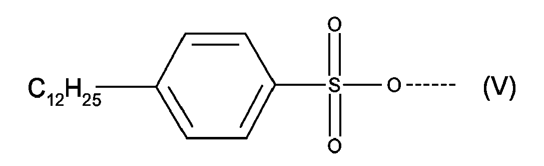

Als Carboxylatgruppen haben sich insbesondere Carboxylate von Fettsäuren besonders geeignet erwiesen. Als bevorzugte Carboxylate gilt Decanoat.

In den obigen Formeln (IV) und (V) zeigt die gestrichelte Bindung hierbei die Sauerstoff-Titan-Bindung an.

Organo-Titanverbindungen sind kommerziell erhältlich, beispielsweise bei der Firma Kenrich Petrochemicals oder DuPont. Beispiele für geeignete Organo-Titanverbindungenverbindungen sind beispielsweise Ken-React® KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA 01, LICA 09, LICA 12, LICA 38, LICA 44, LICA 97, LICA 99, KR OPPR, KR OPP2 von Kenrich Petrochemicals oder Tyzor ® ET, TPT, NPT, BTM, AA, AA-75, AA-95, AA-105, TE, ETAM, OGT von DuPont. Bevorzugt gelten Ken-React® KR 7, KR 9S, KR 12, KR 26S, KR 38S, KR44, LICA 09, LICA 44, NZ 44, sowie Tyzor® ET, TPT, NPT, BTM, AA, AA-75, AA-95, AA-105, TE, ETAM von DuPont.

Als besonders bevorzugt sind Organo-Titanverbindungen mit über eine Sauerstoff-Titan-Bindung an das Titanatom gebundenen Substituenten der Formeln (IV) und/oder (V).

Die mindestens eine hydrolysierbare Haftvermittlersubstanz kann weiterhin eine Organo-Zirkoniumverbindung sein. Grundsätzlich sind alle dem Fachmann bekannte Organo-Zirkoniumverbindungen, welche als Haftvermittler eingesetzt werden, geeignet. Insbesondere geeignet sind Organo-Zirkoniumverbindungen, welche mindestens eine funktionelle Gruppe trägt, welche ausgewählt ist aus der Gruppe umfassend Alkoxygruppe, Sulfonatgruppe, Carboxylatgruppe, Phosphatgruppe oder Mischungen davon, und welche über ein Sauerstoff-Zirkonium-Bindung direkt an ein Zirkoniumatom gebunden ist.

Als Alkoxygruppen haben sich insbesondere Isopropoxy- und sogenannte Neoalkoxy-Substituenten, insbesondere der Formel (IV) wie oben beschrieben besonders geeignet erwiesen, wobei die gestrichelte Bindung hierbei die Sauerstoff-Zirkonium-Bindung anzeigt.

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der folgenden Formel (V) wie oben beschrieben, wobei die gestrichelte Bindung hierbei die Sauerstoff-Zirkonium-Bindung anzeigt.

Als Carboxylatgruppen haben sich insbesondere Carboxylate von Fettsäuren besonders geeignet erwiesen. Als bevorzugte Carboxylate gelten Stearate und Isostearate.

Organo-Zirkoniumverbindungen sind kommerziell erhältlich, beispielsweise bei der Firma Kenrich Petrochemicals. Beispiele für geeignete Organo-Zirkoniumverbindungen sind beispielsweise Ken-React® NZ 38J, NZ TPPJ, KZ OPPR, KZ TPP, NZ 01, NZ 09, NZ 12, NZ38, NZ 44, NZ 97.

Weiterhin kann die Haftvermittlersubstanz der erfindungsgemässen Zusammensetzung Mischungen von mindestens einer Organo-Siliziumverbindung mit mindestens einer Organo-Titanverbindung und/oder mit mindestens einer Organo-Zirkoniumverbindung enthalten. Ebenso sind Mischungen von mindestens einer Organo-Titanverbindung mit mindestens einer Organo-Zirkoniumverbindung möglich. Bevorzugt sind Mischungen von mindestens einer Organo-Siliziumverbindung mit mindestens einer Organo-Titanverbindung.

Besonders bevorzugt sind Mischungen von mehreren Organo-Siliziumverbindungen oder Mischungen von einer Organo-Siliziumverbindung mit einer Organo-Titanverbindung, bzw Organo-Zirkoniumverbindung.

Als Mischungen von Organo-Siliziumverbindungen haben sich besonders gut Mischungen von Haftvermittlersubstanzen der Formeln (I) erwiesen, wobei mindestens eine dieser Substituenten H als Substituenten X trägt und mindestens eine dieser Substanzen eine funktionelle Gruppe, welche ausgewählt ist aus der Gruppe umfassend Oxiran, (Meth)acryloxy, Amin, SH und Vinyl, als Substituenten X trägt. Bevorzugt handelt es sich bei diesen Mischungen um mindestens ein Alkyl-Trialkoxysilan mit einem Aminoalkyl-Trialkoxysilan und/oder Mercaptoalkyl-Trialkoxysilan.

Die Haftvermittlerzusammensetzung kann neben den beschriebenen hydrolysierbaren Haftvermittlersubstanzen weitere Bestandteile umfassen. Als weiteren Bestandteil kommt beispielsweise mindestens ein Lösungsmittel in Frage. In einer Ausführungsform eignen sich als Lösungsmittel insbesondere leicht flüchtige Lösungsmittel, das heisst solche mit einem Siedepunkt bei 760 Torr von zwischen 25°C und 140°C, insbesondere von zwischen 50°C und 120°C, bevorzugt von zwischen 65 und 99°C.

In einer anderen Ausführungsform eignen sich insbesondere weniger flüchtige Lösungsmittel, das heisst solche Lösungsmittel, welche einen Siedepunkt bei 760 Torr über der Einbrenntemperatur aufweisen. Insbesondere weisen sie einen Siedepunkt von ≥ 100°C, vorzugsweise zwischen 100°C und 200°C, bevorzugt zwischen 140°C und 200°C, auf.

Weiterhin hat es sich gezeigt, dass insbesondere Mischungen verschiedener Lösungsmittel vorteilhaft sind. Als besonders geeignet hat sich gezeigt, wenn Mischungen von Kohlenwasserstoffen untereinander oder Mischungen mindestens eines Kohlenwasserstoffes mit mindestens eines polaren Lösungsmittel, welches mindestens ein Heteroatom in seiner Strukturformel aufweist, verwendet werden. Der Kohlenwasserstoff kann gesättigt oder olefinisch oder aromatisch ungesättigt sein. Bevorzugt ist der Kohlenwasserstoff gesättigt. Als Heteroatom im polaren Lösungsmittel sind insbesondere O, N und S als geeignet zu betrachten. Bevorzugt ist das mindestens eine Heteroatom ein Sauerstoffatom, was besonders bevorzugt in Form von Hydroxyl-, Carbonyl-, Ether-, Carbonsäure- oder Carbonsäurederivat-Gruppen, wie beispielsweise Ester-, Amid- oder Carboxylat-Gruppe, in der Strukturformel des polaren Lösungsmittel vorliegt. Bevorzugte polare Lösungsmittel sind Wasser, Alkohole und Ketone. Meist bevorzugte polare Lösungsmittel sind Alkohole, insbesondere gesättigte, verzweigte oder lineare oder cyclische Alkohole mit 1 bis 8 Kohlenstoffatomen.

Bevorzugt als Lösungsmittel sind Alkohole und aliphatische und cycloaliphatische Kohlenwasserstoffe, insbesondere Ethanol, Isopropanol, Hexan, Cyclohexan, Heptan oder Octan, sowie deren Mischungen. Bevorzugt ist das Lösungsmittel Ethanol oder Heptan.

Als besonders bevorzugt gelten Lösungsmittelgemische eines Alkohols und eines aliphatischen oder cycloaliphatischen Kohlenwasserstoffes. Insbesondere solche von Ethanol oder Isopropanol mit Hexan oder Cyclohexan oder Heptan oder Octan, sowie deren Mischungen. Als besonders bevorzugte Lösungsmittelmischung hat sich die Mischung von Ethanol und Heptan gezeigt.

Als weniger flüchtige Lösungsmittel gelten insbesondere Kohlenwasserstoffe wie Toluol, Xylol oder einer Kohlenwasserstoffmischung mit einem Siedepunkt zwischen 120°C und 200°C, insbesondere zwischen 120°C und 140°C.

Unter Verwendung eines solchen Lösungsmittels kann erreicht werden, dass homogen kleine Konzentrationen an Haftvermittlersubstanzen, d.h. an Organo-Siliziumverbindung und/oder Organo-Titanverbindung, auf eine Oberfläche aufgetragen werden können. Der Gehalt an Lösungsmittel ist vorzugsweise derart gewählt, dass der Gehalt an Organo-Siliziumverbindung und / oder Organo-Titanverbindung von 0.1 bis 10 Gew.-%, insbesondere zwischen 0.5 bis 10 Gew.-%, aufweist.

Es kann jedoch durchaus auch vorteilhaft sein, dass die Haftvermittlerzusammensetzung keine Lösungsmittel enthält und der Gehalt von Organo-Siliziumverbindung, Organo-Zirkoniumverbindung und/oder Organo-Titanverbindung von mehr als 90 Gew.%, insbesondere von mehr als 99 Gew.%, beträgt. Beispielsweise können hiermit durch VOC-Vorschriften auferlegte Limitierungen oder Nachteile vermieden werden.

Es ist eine besondere Eigenschaft der vorliegenden Erfindung, dass auch hydrolysierbare Flüssigkeiten, insbesondere Haftvermittlerzusammensetzungen, ohne Lösungsmittel in dünnen Schichten gleichmässig auf eine Substratoberfläche aufgetragen werden können durch die Verwendung eines Ultraschallzerstäubers. Bisher war es kaum möglich, mit herkömmlichen Applikationsmethoden, beispielsweise mit einem Tuch oder Schwamm, lösungsmittelfreie Haftvermittlerzusammensetzungen aufzutragen. Für eine gleichmässige und ausreichende Benetzung musste jeweils ein Lösungsmittel verwendet werden.

Als weitere Komponente in der Haftvermittlerzusammensetzung kann ein reaktives Bindemittel vorhanden sein, wobei insbesondere Polyurethanprepolymere mit Isocyanatgruppen und / oder Silangruppen erwähnt werden sollen; oder es können Polyisocyanate vorhanden sein, zum Beispiel Tris-(4-isocyanatophenyl)-methan, Tris-(4-isocyanatophenyl)-thiophosphat, die bereits erwähnten monomeren MDI, TDI, HDI und IPDI, sowie Oligo-, Poly- oder Copolymere dieser Monomere, wie polymeres HDI, polymeres MDI, beispielsweise kommerziell erhältlich als Voranate® M 229 (Dow), Desmodur® VL R 20 (Bayer), oder Allophanate, Biurete, Uretdione und Isocyanurate dieser Monomere, insbesondere HDI-Biurete, wie beispielsweise kommerziell erhältlich als Desmodur® N-100 (Bayer), Luxate® HDB 9000 (Lyondell/Bayer), HDI-Trimere, wie beispielsweise kommerziell erhältlich als Desmodur® N-3300 (Bayer), Desmodur® N-3600 (Bayer), Luxate® HT 2000 (Lyondell/Bayer), Desmodur® XP 2410, HDI-Dimere, wie beispielsweise kommerziell erhältlich als Desmodur® N-3400 (Bayer), Luxate® HD 100 (Lyondell/Bayer), IPDI-Trimere, wie beispielsweise kommerziell erhältlich als Desmodur® Z 4470 (Bayer), Vestanat® T 1890 (Degussa), Luxate® IT 1070 (Lyondell/Bayer), HDI- und IPDI-Allophanate, TDI-Trimere, wie beispielsweise kommerziell erhältlich als Desmodur® IL (Bayer), TDI-Addukte, wie beispielsweise kommerziell erhältlich als Desmodur® L (Bayer), TDI-/HDI-Polymere, wie beispielsweise kommerziell erhältlich als Desmodur® HL (Bayer), Polurene® IK D (Sapici), Hartben AM 29 (Benasedo).

Ebenfalls als Bestandteil der Haftvermittlerzusammensetzung verwendet werden können Katalysatoren für die Hydrolyse z.B. von Silangruppen, und zwar beispielsweise in der Form von organischen Carbonsäuren wie Benzoesäure oder Salicylsäure, organischen Carbonsäureanhydriden wie Phthalsäureanhydrid oder Hexahydrophthalsäureanhydrid, Silylester organischer Carbonsäuren, organische Sulfonsäuren wie p-Toluolsulfonsäure oder 4-Dodecylbenzolsulfonsäure, oder andere organische oder anorganische Säuren, oder Mischungen der vorgenannten Säuren; sowie Katalysatoren für die Reaktion von Isocyanatgruppen, beispielsweise Zinnverbindungen wie Zinn(II)-octoat, Monobutylzinntrichlorid, Dibutylzinndichlorid, Dibutylzinnoxid, Dibutylzinndiacetat, Dibutylzinndilaurat, Dibutylzinndiacetylacetonat, Dibutylzinndicarboxylate, Dioctylzinndicarboxylate, Alkylzinnthioester, Bismutverbindungen wie Bismut(III)-octoat, Bismut(III)-neodecanoat, Zinkverbindungen wie Zink(II)-octoat, sowie aminogruppenhaltige Verbindungen wie beispielsweise 2,2'-Dimorpholinodiethylether, 1,4-Diazabicyclo[2.2.2]octan, 1,8-Diazabicyclo[5.4.0]undeo-7-en; sowie weitere Katalysatoren wie Titanate und Zirkonate. Solche Katalysatoren können, wie vorgängig beschrieben, auch als zweite Komponente K2 in Tropfenform mit der Haftvermittlerzusammensetzung vermischt werden. Das heisst, die Katalysatoren können entweder direkt in der hydrolysierbaren Flüssigkeit, insbesondere der Haftvermittlerzusammensetzung, enthalten sein, oder erst kurz vor dem Auftragen der hydrolysierbaren Flüssigkeit, insbesondere der Haftvermittlerzusammensetzung, mit den Tröpfchen der hydrolysierbaren Flüssigkeit vermischt werden.

Weiterhin können in der Primerchemie übliche Netzmittel, Füllstoffe und Additive eingesetzt werden. Beispiele nicht limitierender Art hierfür sind Talk, Russ, organische und anorganische Pigmente, Stabilisatoren, sowie chemische und physikalische Trocknungsmittel.

Als weitere Bestandteile ebenfalls geeignet sind UV-Absorber sowie optische Aufheller. Solche optischen Aufheller absorbieren UV-Licht und emittieren sichtbares, normalerweise blaues Licht. Ein bevorzugter optischer Aufheller stellt Ciba Uvitex® OB von Ciba Speciality Chemicals dar. Weitere geeignete Aufheller sind beispielsweise in Kirk-Othmer, "Encyclopedia of Chemical Technology" 4th Ed., John Wiley & Sons, New York, Vol. 11, S. 227-241 angegeben. Die UV-Absorber können beispielsweise organischer Natur sein, wie beispielsweise solche aus der Tinuvin® -Produktelinie von Ciba Speciality Chemicals, oder sie können anorganischer Natur sein, wie beispielsweise Farbpigmente, insbesondere Russ oder Titandioxid.

Das Substrat, auf dessen Oberfläche die hydrolysierbare Flüssigkeit mittels eines Ultraschallzerstäubers aufgetragen wird, kann sehr unterschiedlich sein. Besonders geeignet sind anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Spanplatten, Kunststoffe wie PVC, Polycarbonate, PMMA, Polyester, Epoxidharze; beschichtete Substrate wie pulverbeschichtete Metalle oder Legierungen; sowie Farben und Lacke, insbesondere Automobildecklacke. Als meist bevorzugte Substrate gelten Glas, insbesondere mit Keramik beschichtetes Glas, lackierte Untergründe, wie lackierte Metallflansche, sowie Kunststoffe, insbesondere PVC.

Die vorliegende Erfindung betrifft weiterhin ein Verfahren zum Auftragen einer hydrolysierbaren Flüssigkeit, insbesondere einer Haftvermittlerzusammensetzung, auf mindestens eine Substratoberfläche, bei welchem für das Auftragen ein Ultraschallzerstäuber wie vorgängig beschrieben verwendet wird. Vorzugsweise wird ein Ultraschallzerstäuber verwendet, welcher Teil einer Auftragsdüse einer Zerstäubungsvorrichtung ist, welche ein präzises Auftragen auf eine Substratoberfläche ermöglicht und ein Verschmutzen der weiteren Umgebung verhindert. Die Zerstäubungsvorrichtung wird vorzugsweise so ausgebildet, dass ein Gehäuse zum Schutz gegen mechanisches Berühren wie auch zur Abschirmung austretender Störstrahlung vom Ultraschallzerstäuber verwendet wird. Das Gehäuse kann so ausgebaut werden, dass es den Strahl mit austretenden Flüssigkeitströpfchen so lenkt, dass die Flüssigkeitströpfchen auf den gewünschten begrenzten Bereich der Substratoberfläche aufgetragen werden.

Die vorliegende Erfindung kann insbesondere bei der Vorbehandlung von Substratoberflächen, welche anschliessend mit einem Kleb- oder Dichtstoff verbunden werden sollen, eingesetzt werden. Als Vorbehandlung wird dabei vorzugsweise eine Haftvermittlersubstanz mittels Verwendung des vorgängig beschriebenen Ultraschallzerstäubers aufgetragen. Geeignete Anwendungen sind daher beispielsweise das Verkleben von Bauteilen im Hoch- oder Tiefbau und bei der Fertigung oder Reparatur von industriellen Gütern oder Konsumgütern, insbesondere von Fenstern, Haushaltmaschinen oder Transportmitteln wie Fahrzeugen zu Wasser oder zu Lande, bevorzugt Automobile, Busse, Lastkraftwagen, Züge oder Schiffe; das Abdichten von Fugen, Nähten oder Hohlräumen in der industriellen Fertigung oder Reparatur, oder im Hoch- oder Tiefbau. Besonders geeignet ist die vorliegende Erfindung beim Auftragen einer Haftvermittlersubstanz auf eine Scheibe, vorzugsweise aus Glas, wo die Scheibe mit mindestens einem weiteren Substrat aus Glas, Holz, Lack, oder Kunststoff, insbesondere Polyvinylchlorid (PVC) verbunden, insbesondere verklebt, werden soll. Somit kann das erfindungsgemässe Verfahren vorzugsweise im Fahrzeugbau, wo Glas mit einer mit Lack beschichteten Karosserie verklebt wird, oder im Tür- oder Fensterbau, wo Glas mit einem Rahmen aus Holz oder Kunststoff verklebt wird, eingesetzt werden.

Des weiteren betrifft die Erfindung ein Verfahren zum Verkleben und/oder Abdichten von mindestens zwei Substratoberflächen **S1** und **S2** umfassend die Schritte: (i) Auftragen einer Haftvermittlerzusammensetzung mittels Verwendung eines vorgängig beschriebenen Ultraschallzerstäubers auf ein Substrat **S1** und/oder ein Substrat **S2;** (ii) Applizieren eines Kleb- oder Dichtstoffes auf mindestens eine Substratoberfläche **S1** und/oder **S2** oder zwischen die Substrate **S1** und **S2;** (iii) Kontaktieren der Substrate **S1** und **S2** über den applizierten Kleb- oder Dichtstoff; und; (iv) Aushärten des applizierten Kleb- oder Dichtstoffes; wobei die Substrate **S1** und **S2** gleich oder verschieden voneinander sind.

In der Anwendung als Dichtstoff wird die Zusammensetzung zwischen die Substrate **S1** und **S2** appliziert und anschliessend erfolgt die Aushärtung. Üblicherweise wird der Dichtstoff in eine Fuge eingepresst.

Die Applikation des Kleb- oder Dichtstoffes erfolgt vorzugsweise gleichmässig.

In beiden Anwendungen kann das Substrat **S1** gleich oder verschieden von Substrat **S2** sein.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farben und Lacke, insbesondere Automobildecklacke.

Es hat sich gezeigt, dass sich Polyurethanklebstoffe, (Meth)acrylatklebstoffe, Epoxidharzklebstoffe oder Klebstoffe auf Basis von Alkoxysilan-funktionellen Prepolymeren bestens für eine Verklebung eignen.

Als Polyurethanklebstoffe sind einerseits einkomponentige feuchtigkeitshärtende Klebstoffe oder zweikomponentige Polyurethanklebstoffe geeignet. Derartige Klebstoffe enthalten Polyisocyanate, insbesondre in Form von Isocyanat-Gruppen aufweisenden Prepolymeren. Bevorzugt werden Polyurethanklebstoffe, wie sie von Sika Schweiz AG unter den Produktelinien Sikaflex®, SikaPower® und SikaForce® kommerziell verkauft werden.

Als (Meth)acrylatklebstoffe sind zweikomponentige Klebstoffe zu verstehen, deren erste Komponente Acrylsäure und/oder Methacrylsäure und/oder deren Ester umfasst, und deren zweite Komponente ein Radikalbildner, insbesondere ein Peroxid, umfasst. Bevorzugte derartige Klebstoffe sind unter der Produktelinie SikaFast® kommerziell von Sika Schweiz AG erhältlich.

Als Epoxidharzklebstoffe werden Klebstoffe verstanden, welche auf Basis von Glycidylethern, insbesondere von Diglycidylether von Bisphenol-A und/oder Bisphenol-F, formuliert sind. Besonderes geeignete sind zweikomponentige Epoxidharzklebstoffe, deren eine Komponente Diglycidylether von Bisphenol-A und/oder Bisphenol-F enthalten und deren zweite Komponente Polyamine und/oder Polymerkaptane enthalten. Bevorzugt werden zweikomponentige Epoxidharzklebstoffe, wie sie unter der Produktelinie Sikadur® kommerziell von Sika Schweiz AG erhältlich sind. Als besonders geeignet zum Verkleben von Folien haben sich die zweikomponentigen Epoxidharzklebstoffe Sikadur®-Combiflex®, Sikadur®-31, Sikadur®-31DW und Sikadur®-33, bevorzugt Sikadur®-Combiflex®, von Sika Schweiz AG gezeigt.

Als Klebstoffe auf Basis von Alkoxysilan-funktionellen Prepolymeren werden insbesondere Klebstoffe auf Basis von MS-Polymeren oder SPUR (Silane terminated Polyurethanes)-Prepolymeren verstanden. Derartige Alkoxysilan-funktionelle Prepolymere lassen sich beispielsweise über eine Hydrosilyierungsreaktion aus mindestens zwei C=C-Doppelbindung aufweisenden Polyether, insbesondere aus allylterminierten Polyoxyalkylenpolymeren, und mit einem Hydrosilan oder über eine Additionsreaktion von Isocyanatoalkylalkoxysilanen an Polyole oder an Hydroxy-funktionelle Polyurethanprepolymere oder über eine Additionsreaktion von Aminoalkylalkoxysilanen an Isocyanat-funktionelle Polyurethanprepolymere herstellen, wobei die Polyurethanprepolymere ihrerseits über eine Reaktion von Polyisocyanaten und Polyolen und/oder Polyaminen in bekannter Art und Weise zugänglich sind. Klebstoffe auf Basis von Alkoxysilan-funktionellen Prepolymeren sind feuchtigkeitshärtend und reagieren bei Raumtemperatur.

Grundsätzlich können auch reaktive Heissschmelzklebstoffe eingesetzt werden, wie sie von Sika Schweiz AG unter der Produktelinie SikaMelt® kommerziell verkauft werden. Bevorzugt werden jedoch raumtemperaturhärtende Klebstoffe.

Die Substrate können bei Bedarf vor dem Applizieren des Kleb- oder Dichtstoffes zusätzlich zum Auftragen einer Haftvermittlerzusammensetzung vorbehandelt werden. Derartige Vorbehandlungen umfassen neben dem Aufbringen eines Haftvermittlers, einer Haftvermittlerlösung oder eines Primers insbesondere physikalische und/oder chemische Reinigungsverfahren, beispielsweise Schleifen, Sandstrahlen, Bürsten oder dergleichen, oder Behandeln mit Reinigern oder Lösemitteln.

Nach dem Verkleben oder Abdichten der Substrate S1 und S2 gemäss einem erfindungsgemässen Verfahren wird ein verklebter oder abgedichteter Artikel erhalten. Ein derartiger Artikel kann ein Bauwerk, insbesondere ein Bauwerk des Hoch- oder Tiefbaus, oder ein Transportmittel sein. Bevorzugt ist der Artikel ein Transportmittel, beispielsweise ein Fahrzeug zu Wasser oder zu Lande, insbesondere ein Automobil, ein Bus, ein Lastkraftwagen, ein Zug oder ein Schiff, oder ein Anbauteil davon. Besonders bevorzugt ist der verklebte oder abgedichtete Artikel ein Transportmittel, insbesondere ein Automobil, oder ein Anbauteil eines Transportmittels, insbesondere eines Automobils.

Selbstverständlich ist die Erfindung nicht auf das gezeigte und beschriebene Ausführungsbeispiel beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

### Beispiele

### Herstellung der Haftvermittlerzusammensetzung

Für die Sprühversuche mit dem Ultraschallzerstäuber wurde die Haftvermittlerzusammensetzung aus Tabelle 1 verwendet.

**Tabelle 1 Haftvermittlerzusammensetzung**

| Menge | Name | Lieferant |
|---|---|---|
| 1 Gewichts-% | Silquest® A1110 | GE Speciality Materials, Schweiz |
| 0.5 Gewichts-% | Hydropalat® 120 | Cognis, Deutschland |
| 1 Gewichts-% | Essigsäure (100%) | Fluka, Schweiz |
| 97.5 Gewichts-% | Wasser | |

### Versuchsaufbau

Für die Zuführung der Haftvermittlerzusammensetzung in einen Ultraschallzerstäuber wurde eine Schlauchquetschpumpe des Typs REGLO Digital der Firma Ismatec SA, Schweiz, mit 12 Schlauchrollen und einem Schlauch von 1.09 mm Innendurchmesser verwendet. Nach der Kalibrierung der Pumpe, berechnet diese die nötige Umdrehungszahl für die vorgewählte Menge selbständig. Die Haftvermittlerzusammensetzung wurde in einen Ultraschallzerstäuber des Typs US2 der Firma Lechler GmbH mit einer konstanten Zuführung von etwa 0.75 bzw. 0.95 ml/min geleitet und mit 58kHz zerstäubt. Die Austrittsöffnung des Ultraschallzerstäubers wurde dabei in einem Abstand von 6,5 cm zum Substrat aufgebaut. Als Substrat wurde ein Glaskeramikprüfkörper von Rochol GmbH verwendet. Es wurde eine Auftragsgeschwindigkeit von etwa 20 cm/s gewählt, d.h. die Austrittsöffnung des Ultraschallzerstäubers bewegte sich relativ zur Glaskeramikoberfläche mit einer Geschwindigkeit von 20 cm/s. Um einen definierten und auf Fremdluftstörung unempfindlichen Nebelstrahl zu erzeugen wurde ein Trägerluftstrom von ca. 25 l/min durch den Zerstäuber geleitet.

Dadurch konnte die Haftvermittlerzusammensetzung mit einer Applikationsbreite von etwa 2,5 cm auf das Substrat aufgetragen werden. Nach einer Ablüftezeit von etwa 15 Sekunden erhielt man eine Trockenfilmschichtdicke der Haftvermittlerzusammensetzung von 0.08 bis 0.14 µm. Mit diesem erfindungsgemässen Verfahren konnte eine Haftvermittlerzusammensetzung mit einer relativ konstanten Schichtdicke auf einen begrenzten Bereich aufgetragen werden, wodurch das Problem des sogenannten 'Oversprays' minimiert werden konnte.

### Testen der Verklebung

Etwa 24 Stunden nach dem Auftragen der Haftvermittlerzusammensetzung auf eine Glaskeramikoberfläche wurde der einkomponentige feuchtigkeitshärtende Polyurethanklebstoff Sikaflex®-250 DM-2 ("DM2"), welcher Polyurethanprepolymere mit Isocyanatgruppen enthält und bei Sika Schweiz AG kommerziell erhältlich ist, als flache Dreickesraupe mit einer Kartuschenpresse und einer Düse aufgetragen und während 5 Tagen bei 23°C und 50% rel. Luftfeuchtigkeit (Klimalagerung "KL") ausgehärtet.

Die Haftung des Klebstoffes wurde mittels 'Raupentest' getestet. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen des kohäsiven Anteils der Haftfläche:
1 = > 95 % Kohäsionsbruch
2 = 75 - 95 % Kohäsionsbruch
3 = 25 - 75 % Kohäsionsbruch
4 = < 25 % Kohäsionsbruch
5 = 0% Kohäsionsbruch (rein adhäsiver Bruch)

Testresultate mit Kohäsionsbrüchen von weniger als 75%, d.h. mit Bewertung von 3, 4 oder 5 gelten als ungenügend.

Die Haftresultate aus Tabelle 2 zeigen, dass man eine gute Haftung des Klebstoffs auf der Glaskeramikoberfläche erhält, wenn die Haftvermittlerzusammensetzung in einer Menge von 0.95ml/min und mit einem Trägerluftstrom (TL) von ca. 25 l/min aufgetragen wurde.

**Tabelle 2. Haftung des Klebstoffs DM-2 auf wässriger Haftvermittlerzusammensetzung nach unterschiedlicher Auftragsmenge der Haftvermittlerzusammensetzung. Abk: TL = Trägerluft, DM-2 = Sikaflex®-250 DM-2**

| Auftragsmenge | 0.75ml/min | | 0.95ml/min |
|---|---|---|---|
| Trägerluft (TL) | ohne TL | mit TL | mit TL |
| DM-2 | 3 | 3 | 2 |

## Patentansprüche

1. Verwendung eines Ultraschallzerstäubers zum Auftragen einer hydrolysierbaren Flüssigkeit auf mindestens eine Substratoberfläche.

2. Verwendung nach Anspruch 1, **dadurch gekennzeichnet, dass** die hydrolysierbare Flüssigkeit eine Haftvermittlerzusammensetzung ist.

3. Verwendung nach Anspruch 2, **dadurch gekennzeichnet, dass** die Haftvermittlerzusammensetzung mindestens eine Haftvermittlersubstanz, ausgewählt aus der Gruppe bestehend aus Organo-Siliziumverbindung, Organo-Titanverbindung und Organo-Zirkoniumverbindung, umfasst.

4. Verwendung nach Anspruch 2 oder 3, **dadurch gekennzeichnet, dass** die Haftvermittlerzusammensetzung zusätzlich mindestens ein Lösungsmittel umfasst.

5. Verwendung nach einem der vorhergehenden Ansprüche, **dadurch gekennzeichnet, dass** der Ultraschallzerstäuber Teil einer Auftragsdüse ist.

6. Verwendung nach einem der vorhergehenden Ansprüche, **dadurch gekennzeichnet, dass** der Ultraschallzerstäuber mindestens ein piezoelektrisches Element umfasst.

7. Verwendung nach einem der vorhergehenden Ansprüche, **dadurch gekennzeichnet, dass** der Ultraschallzerstäuber Tröpfchen mit einem Durchmesser bei einem Maximum in der Häufigkeitsverteilung von weniger als 100 µm generiert.

8. Verwendung nach einem der vorhergehenden Ansprüche, **dadurch gekennzeichnet, dass** die hydrolysierbare Flüssigkeit mit Hilfe von mindestens einem Trägergas auf die Substratoberfläche aufgetragen wird.

9. Verwendung nach Anspruch 8, **dadurch gekennzeichnet, dass** das Trägergas eine zusätzliche Komponente **K2** umfasst, welche mit dem durch den Ultraschallzerstäuber generierten Tröpfchen einer ersten Komponente **K1,** welche mindestens eine hydrolysierbare Flüssigkeit umfasst, auf die Substratoberfläche aufgetragen wird.

10. Verwendung nach Anspruch 9, **dadurch gekennzeichnet, dass** die erste Komponente **K1** mindestens eine funktionelle Gruppe **Y** und die zweite Komponente **K2** mindestens eine funktionelle Gruppe **Z** aufweist, und dass die funktionelle Gruppe **Y** und die funktionelle Gruppe **Z** chemisch, insbesondere über eine Additionsreaktion, miteinander reagieren.

11. Verwendung nach Anspruch 9, **dadurch gekennzeichnet, dass** die zweite Komponente **K2** einen Katalysator umfasst.

12. Verwendung nach einem der vorhergehenden Ansprüche, **dadurch gekennzeichnet, dass** das Substrat Glas, Metall oder Keramik ist.

13. Verfahren zum Auftragen einer hydrolysierbaren Flüssigkeit auf mindestens eine Substratoberfläche, bei welchem für das Auftragen ein Ultraschallzerstäuber gemäss einer Verwendung nach einem der Ansprüche 1 bis 12 verwendet wird.

14. Verfahren zum Verkleben von Substraten **S1** und **S2** umfassend die Schritte
- Auftragen einer Haftvermittlerzusammensetzung gemäss einem Verfahren nach Anspruch 13 auf ein Substrat **S1** und/oder ein Substrat **S2;**
- Applikation eines Klebstoffs auf ein Substrat **S1** und/oder ein Substrat **S2;**
- Kontaktieren der Substrate **S1** und **S2** über den applizierten Klebstoff; und
- Aushärtung des Klebstoffs,
wobei die Substrate **S1** und **S2** gleich oder verschieden voneinander sind.

15. Verfahren des Abdichtens umfassend die Schritte
- Auftragen einer Haftvermittlerzusammensetzung gemäss einem Verfahren nach Anspruch 13 auf ein Substrat **S1** und/oder ein Substrat **S2;**
- Applikation eines Dichtstoffs zwischen ein Substrat **S1** und ein Substrat **S2;** und
- Aushärtung des Dichtstoffs,
wobei die Substrate **S1** und **S2** gleich oder verschieden voneinander sind.

16. Verfahren gemäss Anspruch 14 oder 15, **dadurch gekennzeichnet, dass** mindestens eines der Substrate **S1** oder **S2** Glas, Glaskeramik, Beton, Mörtel, Backstein, Ziegel, Gips, ein Naturstein wie Granit oder Marmor; ein Metall oder eine Legierung wie Aluminium, Stahl, Buntmetall, verzinktes Metall; ein Holz, ein Kunststoff wie PVC, Polycarbonat, PMMA, Polyester, Epoxidharz; eine Pulverbeschichtung, eine Farbe oder ein Lack, insbesondere ein Automobillack, ist.

17. Verklebter Artikel, welcher mittels eines Verfahrens zur Verklebung gemäss Anspruch 14 oder 16 hergestellt wird.

18. Abgedichteter Artikel, welcher mittels eines Verfahrens zur Abdichtung gemäss einem der Ansprüche 15 oder 16 hergestellt wird.

19. Verklebter oder abgedichteter Artikel gemäss Anspruch 17 oder 18, **dadurch gekennzeichnet, dass** der Artikel ein Bauwerk, ein Industriegut oder ein Transportmittel, insbesondere ein Fahrzeug zu Wasser oder zu Lande, bevorzugt ein Automobil, ein Bus, ein Lastkraftwagen, ein Zug oder ein Schiff, oder ein Teil davon, ist.
